# EUROPEAN PATENT APPLICATION

(11) **EP 0 825 609 A1**
(43) Date of publication of application: **25.02.1998**
(21) Application number: 97830350.1
(22) Date of filing: 14.07.1997
(51) Int. Cl.: G11B 33/04

(54) **A storage device for storing ojects in an ordered way and method for producing the same**

(30) Priority: 12.08.1996 GB 9616901
(71) Applicant: F.A.O. S.p.A., 28023 Crusinallo di Omegna (VB) (IT)
(72) Inventor: Arad, Ron, London NW3 4ET (GB)
(74) Representative: Zavattoni Gusmeroli, Maria Chiara

(57) **Abstract**

A storage or supporting device (2) comprising a strip of material (4), adhesive means (6) on a first face (8) of the strip of material (4), and a plurality of retaining members (10) extending outwardly from a second face (12) of the strip of material (4), the strip of material (4) being a strip of flexible material, the retaining members (10) being spaced apart and such that each pair of adjacent retaining members (10) is able to receive an object (14) therebetween.

## Description

This invention relates to a storage device and, more especially, this invention relates to a storage device for storing objects such for example as flat sided objects.

Objects, such for example as containers for electronic, optical or magnetic recordings are traditionally stored in three different types of storage devices. The first type of storage device takes the form of a closed box, a cabinet or a drawer. The second type of storage device takes the form of a rigid rack which supports one or more edges of the object. The third type of storage device takes the form of an open fabric pocket arrangement, optionally supported by a structural frame. These three different types of storage devices all store relatively small numbers of objects when compared with their own size.

There is a need for a storage device which is less bulky than the above mentioned known types of storage devices, and which is able to store a large number of objects compared with its size. It is an aim of the present invention to provide such a storage device. Such an aim has been reached by means of a device as stated in claim 1.

In other words, according to the present invention there is provided a storage device comprising a strip of material, anchorage means on a first face of the strip of material, and a plurality of retaining members extending outwardly from a second face of the strip of material. The strip of material is preferably a strip of flexible material, the retaining members being spaced apart in such a way that each pair of retaining members is able to receive an object therebetween. The storage device may be stuck on a support surface by the anchorage means.

The retaining members are preferably formed as an integral part of the strip of material. If desired, however, the retaining members may be separately formed from the strip of material and fixed to it.

The strip of material may be a strip of a plastics material. The plastics material may be any suitable plastics material, such for example as polyvinyl chloride or polyethylene.

If desired, the strip of material may be a strip of metal. Aluminium is a presently preferred metal since it is easily flexible whilst being of a good aesthetic appearance.

Preferably, the retaining members are in the form of teeth.

The retaining members may have transverse sides which slope inwardly or towards the strip of material.

Usually, the anchorage means is provided with an adhesive strip, protected by means of a peelable or peel-off backing layer. The peel-off backing layer may be made of any suitable material such for example as Kraft paper or a material coated with silicone release agent.

The use of different anchorage means is possible, such as a strip of fabric with hooks ("velcro") or magnetic means.

The storage device is advantageously packaged in the form of a roll.

If desired, however, the storage device may be folded or it may be in the form of separate strips.

Preferably, the object is a flat sided object but other types of objects may be stored.

The flat sided object may be a container for an electronic, optical or magnetic recordings. The recording may thus be in the form of a compact disc, a cassette or a data tape.

The object may altermatively be an item of stationery such for example as an envelope. The object may be an item of food. The item of food may be packaged or it may be unpackaged as in the case of a slice of a toast. The storage device can be stuck by means of the anchorage means in any suitable position on any suitable and appropriate support surface such for example on the top of a table, a sheld or a cupboard. Usually the strip of material will be secured on a horizontal surface but it may be secured on inclined or curved surfaces if desired.

The procedure for producing the device is also the object of the invention.

Embodiments of the invention will now be described solely by way of example, with reference to the accompanying drawings, in which:
figure 1 is a side view of a portion of the storage device;
figure 2 is a plan view of the portion of fig. 1;
figure 3 is an enlarged side view of the storage device as shown in fig. 1;
figure 4 shows two objects supported inside the device of fig. 1;
figure 5-7 show methods for producing storage devices of this invention.

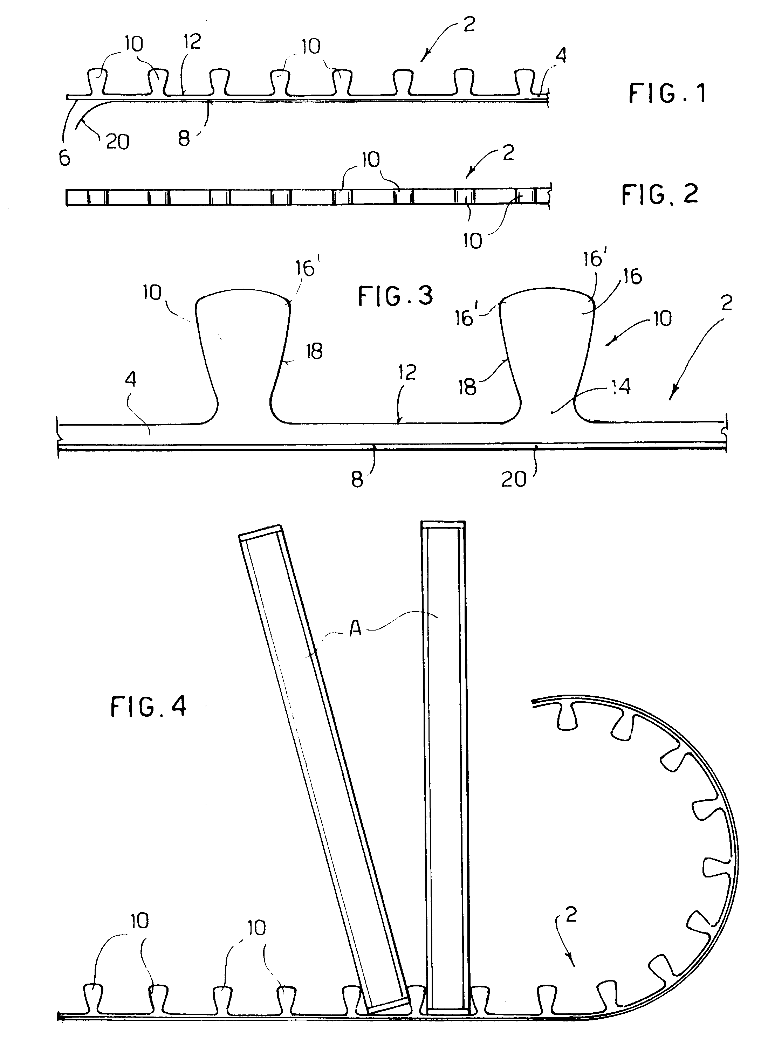

Referring to figures 1 and 2, there is shown a storage device 2 comprising a strip of material 4. The strip of material has adhesive means 6 on a first face 8 of the strip of material 4. The storage device 2 also has a plurality of retaining members 10 extending outwardly from a second face 12 of the strip of material 4. The retaining members 10 are spaced apart. The retaining members 10 are such that each pair of adjacent retaining members 10 is able to receive an object A therebetween.

The strip of material 4 is a flexible strip. The storage device 2 may be stuck to a support surface by the adhesive means 6.

The retaining members 10 are formed as an integral part of the strip of material 4. The illustrated strip of material 4 is a strip of a plastics material but it may alternatively be a strip of metal such for example as a strip of aluminium.

The retaining members 10 are in the form of teeth. As can best be seen from figure 3, the retaining members 10 have - from the side view - a shape which includes a narrow neck 14 and an enlarged head 16, defined by transverse sides 18 which slope inwardly towards the strip of material 4. The transverse sides 18 preferably have a convex round profile with large radius. The neck 14 gives a certain elasticity to the tooth, which therefore is allowed to slope slightly in order to fit the shape of the object to be stored. Advantageously, the retaining members are of a shape that allows the objects A to be tilted to one side as shown in figure 4, for example by 15°. This allows to see the surfaces of the objects, so that a person may easily read and know the content of the object. Advantageously, the profile of the retaining members 10 has the head 16 forming some pivoting points 16' and the sides 18 are restraining faces on opposite sides of each retaining members 10. Any suitable object A may be secured in the device 2.

As shown in fig. 4, the device 2 may receive and keep some objects between two teeth of the same, in a vertical position or slightly tilted, and solve in a excellent way the problem of storing -in an ordered way- objects such as cassettes, compact discs and similar (or also slices of toast or other things) although it has an extremely reduced encumbrance. In particular, it is to be appreciated that a length of more than one meter of strip 2 may occupy, when rolled up, the internal space of a box of the dimensions of a container for compact discs.

As shown in figure 1, the adhesive means 6 is protected by a peel-off backing layer 20. The peel-off backing layer 20 is peeled off just prior to sticking the strip of material 4 to the support surface 16. The storage device can be sold in pieces or preferably stored in a roll (as it can be appreciated from the right hand curved end of the storage device 2 shown in figures 1 and 2).

Instead of the adhesive strip, a strip made of "velcro" or also magnetic means may be used.

The two objects A shown in figures 1 and 2 are containers for compact discs. The containers may be for a wide variety of electronic, optical or magnetic recordings.

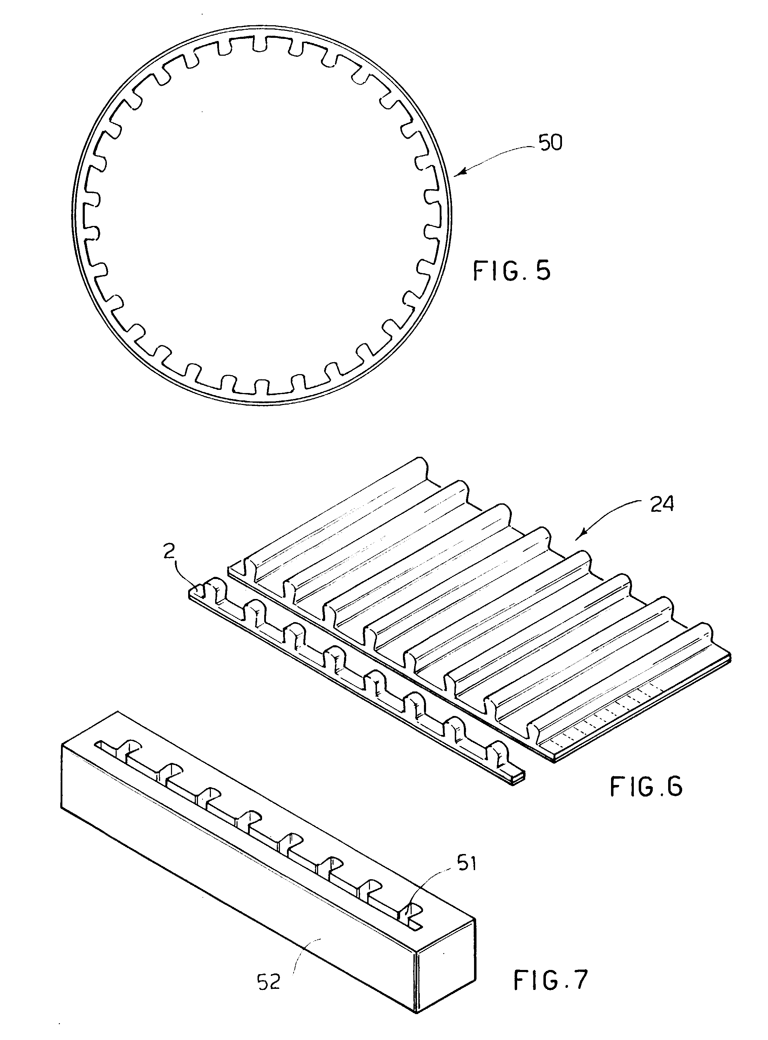

Referring now to figure 5 and following ones, some preferred methods for producing the device will be decribed hereinafter.

In figure 5, a cylindrical body 50 is produced by means of pressing or extrusion, it is provided with longitudinal teeth internally; it is cut along a generatrix and along parallel circles, in order to obtain the strips of device 2. The biadhesive sheet is applied around the cylinder before cutting, or to the sheet obtained from it and laid down. The body 50 may also be a pressing product with a thickness of some millimeters, sufficient for forming the width of the strip 4.

Referring to figure 6, there is shown a storage device 22 which is shown cut from a sheet 24 having parallel projecting parts 25. The sheet may be obtained by cutting the cylinder 50 along a generating line, or in another way (e.g. by extrusion, moulding or rolling). Dash lines 26 show how the sheet 24 can be cut transversely into a plurality of the storage devices 2.

Figure 7 shows how the storage device 2 may be moulded in a cavity 51 in a mould 52.

The strip of material 4 can be produced in a variety of thickness to control the degrees of flexibility required. The material chosen for the strip of material 4 will obviously also affect the flexibility of the strip of material 4. Rigidity is not required in the strip of material 4 since the rigidity is afforded by the support surface to which the strip of material 4 is stuck.

It is to be appreciated that the embodiments of the invention described above with reference to the accompanying drawings have been given by way of example only and that modifications may be effected. The support surface on which the device is stuck may be the top of a table, the top of a shelf or the top of a cupboard.

The storage devices 2 may be produced by methods other than those shown. The retaining members or teeth 10 may be of different shapes to those shown in the drawings.

## Claims

1. A storage device for objects, characterized in that it comprises a strip (4) of relatively flexible and elastic material, anchorage means (6) on a first face (8) of the strip of material, and a plurality of retaining members (10) extending outwardly from a second face (12) of the strip of material, the retaining members being spaced apart and such that each pair of adjacent retaining members is able to receive a border of an object therebetween.

2. A storage device according to claim 1 in which the retaining members are formed as an integral part of the strip of material.

3. A storage device according to claim 1, characterized in that the retaining members are formed in an independent way and are then applied on the strip of material.

4. A storage device according to claim 1, in which the strip of material is a strip of plastics material.

5. A storage supporting device according to claim 1 in which the strip of material is a strip of metal.

6. A storage device according to claim 1 in which the retaining members are in the form of teeth.

7. A storage device according to claim 6 in which the retaining members have a thinner neck and a larger head, and the transverse sides tilted inwardly towards the strip of material.

8. A storage device according to claim 1 in which the anchorage means is an adhesive protected by a peel-off layer (20).

9. A device according to claim 1 characterized in that the anchorage means is one of the following: a strip of fabric with hooks; a magnetic means.

10. A storage device according to any one of the preceding claims, which is in the form of a roll.

11. A method for producing devices according to claim 1, characterized by the fact that it includes the phases of: forming a cylindrical body (50) with longitudinal projecting parts; cutting said cylindrical body along a generating line.

12. A method according to claim 11 characterized in that it includes aslo the phase of cutting said body into transversal planes with respect to the axis of the cylinder.

13. A method according to claim 10, characterized in that the body is obtained by means of pressing.

14. A method according to claim 10, characterized in that the projecting parts are projected inside the body.

15. A method for producing a device according to claim 1, characterized by the fact that it is produced a plane sheet of material with parallel projecting parts and then the sheet is cut along cutting lines which are transversal to the extension of the projecting parts.

16. A method for producing a device according to claim 1 characterized in that the device is obtained through moulding in a mould.
